# EUROPÄISCHE PATENTANMELDUNG

(11) **EP 2 565 344 A1**
(43) Veröffentlichungstag der Anmeldung: **06.03.2013**
(21) Anmeldenummer: 12005588.4
(22) Anmeldetag: 01.08.2012
(51) Int. Cl.: E04F 11/18, E06B 3/54, F16B 9/02

(54) **Vorrichtung zum Befestigen einer Platte an einer Geländerstrebe**

(30) Priorität: 31.08.2011 DE 102011112036
(71) Anmelder: Brenk, Klaus, 79183 Waldkirch (DE)
(72) Erfinder: Brenk, Klaus, 79183 Waldkirch (DE)
(74) Vertreter: Goy, Wolfgang

(57) **Zusammenfassung**

Eine Vorrichtung zum Befestigen einer Platte (2) an einer Strebe (1) eines Geländers weist ein Befestigungsteil (4) mit einem Gewinde (7) und ein Klemmkopf (5) mit einem dazu korrespondierenden Gegengewinde (13), wobei die zu befestigende Platte (2) zwischen dem Befestigungsteil (4) einerseits und dem mit seinem Gegengewinde (13) in oder auf das Gewinde (7) des Betätigungsteils (4) eingedrehten Klemmkopf (5) andererseits sandwichartig festgelegt ist, wobei das Befestigungteil (4) zweiteilig mit einem Grundkörper (6) als erstes Teil sowie mit einem Klemmteil (12) als zweites Teil ausgebildet ist, welche unter Zwischenanordnung der Strebe (1) durch wenigstens eine Schraube (14) fest miteinander verbunden sind und wobei das Gewinde (7) am Grundkörper (6) des Befestigungsteils (4) ausgebildet ist.

## Beschreibung

Die Erfindung betrifft eine Vorrichtung zum Befestigen einer Platte an einer Strebe eines Geländers.

Geländer, wie sie für Balkone oder dgl. verwendet werden, weisen oftmals Streben aus Metall auf. Diese erstrecken sich zwischen dem Boden und der oberen Brüstung. Diese Streben können entweder vertikal, horizontal oder aber auch schräg verlaufen.

Oftmals besteht das Bedürfnis, die offene Struktur eines derartigen Geländers durch Platten aus Plexiglas, Kunststoff, Metall, Holz etc. zu schließen. Dies ist bislang mit großen Schwierigkeiten verbunden.

Der Erfindung liegt daher die **Aufgabe** zugrunde, eine technisch einfache Vorrichtung zum insbesondere nachträglichen Befestigen einer Platte an einem Geländer zu schaffen.

Die technische **Lösung** ist gekennzeichnet durch die Merkmale im Kennzeichen des Anspruchs 1.

Dadurch ist eine Befestigungsvorrichtung geschaffen, mittels welcher von vornherein, aber auch vorzugsweise nachträglich eine Platte an einem Geländer befestigt werden kann. Die Streben des Geländers weisen dabei vorzugsweise einen länglichen, rechteckigen Querschnitt auf. Die Grundidee der Befestigungsvorrichtung besteht darin, daß ein Befestigungsteil mit einem Gewinde vorgesehen ist. Dieses Befestigungsteil umschließt formschlüssig die Strebe des Geländers. Dieses Befestigungsteil ist zweiteilig ausgebildet und weist als erstes Teil einen Grundkörper sowie als zweites Teil ein Klemmteil auf. Diese beiden Teile werden zusammengefügt, so daß sie im zusammengefügten Zustand die Strebe des Geländers formschlüssig umschließen. Die Fixierung dieser beiden Teile erfolgt dadurch, daß sie fest miteinander verschraubt werden. Dadurch ist ein sicherer Sitz des Befestigungsteils auf der Strebe gewährleistet. An dieses, an der Strebe befestigte Befestigungsteil wird dann die zu befestigende Platte angelegt. Bei dieser Platte kann es sich um eine Platte aus Metall, Kunststoff, Plexiglas, Holz etc. handeln. Zu diesem Zweck weist die Platte eine Durchgangsbohrung auf. Von der anderen Seite her wird ein korrespondierender Klemmkopf derart auf das Befestigungsteil auf- oder eingeschraubt, daß dazwischen sandwichartig die zu befestigende Platte zu liegen kommt. Dadurch ist eine technisch einfache Möglichkeit geschaffen, um insbesondere nachträglich an einem Geländer Platten befestigen zu können. Die vorgenannten Streben des Geländers können beliebig ausgerichtet sein. Es ist lediglich erforderlich, daß das Befestigungsteil so ausgebildet ist, daß es die Strebe umschließt.

Eine technische Realisierung in der Ausbildung des Gewindes sowie des Gegengewindes schlägt die Weiterbildung gemäß Anspruch 2 vor. Die Grundidee besteht hier darin, daß in dem Befestigungsteil ein Innengewinde ausgebildet ist, während der Klemmkopf einen Bolzen mit einem korrespondierenden Außengewinde aufweist. Dies bedeutet, daß der Klemmkopf mit seinem Gewindebolzen unter Durchragung der Platte in das Befestigungsteil eingeschraubt wird, bis er bündig an der Oberseite der Platte anliegt.

Vorzugsweise ist gemäß der Weiterbildung in Anspruch 3 das Klemmteil seitlich an den Grundkörper anfügbar. Diese Weiterbildung ist insbesondere dann von Vorteil, wenn der Querschnitt der Strebe des Geländers als längliches Rechteck ausgebildet ist, wobei die Längserstreckung dieses Rechtecks senkrecht auf der Oberseite der zu befestigenden Platte steht. Dies bedeutet, daß bei der Befestigung des Befestigungsteils an der Strebe zunächst der Grundkörper seitlich an die Strebe angelegt wird, um dann anschließend das zweite Teil, nämlich das Klemmteil von der gegenüberliegenden Seite her anzufügen. Anschließend werden sie miteinander verschraubt.

Eine bevorzugte Weiterbildung schlägt gemäß Anspruch 4 vor, daß innenseitig an dem Grundkörper und/oder an dem Klemmteil ein Zwischenkörper anordenbar ist. Dieser Zwischenkörper hat zweierlei Vorteile. Zum einen kann er den Reibschluß zwischen der Oberfläche der Strebe und den Innenseiten des Grundkörpers sowie des Klemmteils des Befestigungsteils erhöhen, um so einen sicheren Halt des Befestigungsteils auf der Strebe zu gewährleisten. Zum anderen (und dies ist der hauptsächliche Vorteil) kann mittels dieses Zwischenkörpers der Zwischenraum ausgefüllt werden, wenn das Umfangsquerschnittsprofil der Strebe kleiner ist als das Innenquerschnittsprofil des durch den Grundkörper sowie durch das Klemmteil definierten Befestigungsteils. Dadurch ist es möglich, ein und dasselbe Befestigungsteil für unterschiedlich profilierte Streben verwenden zu können.

Vorzugsweise besteht gemäß der Weiterbildung in Anspruch 5 der Zwischenkörper aus einem elastischen Material, insbesondere aus Gummi.

Eine weitere Weiterbildung in der Ausbildung des Zwischenteils schlägt gemäß Anspruch 6 vor, daß unterschiedlich dicke Zwischenteile anordenbar sind. Dies hat den Vorteil, daß - wie bereits ausgeführt - ein und dasselbe Befestigungsteil für unterschiedlich profilierte, insbesondere für unterschiedlich dicke Streben eingesetzt werden kann. Es ist lediglich erforderlich, das jeweils notwendige Zwischenteil einzufügen.

Eine weitere bevorzugte Weiterbildung schlägt gemäß Anspruch 7 vor, daß ein und derselbe Zwischenkörper in unterschiedlichen Positionen anordenbar ist, und zwar so, daß der Zwischenraum zwischen der Strebe und dem Befestigungsteil unterschiedlich ausgefüllt wird. Dadurch ist es möglich, daß unterschiedlich dicke oder unterschiedlich profilierte Streben unter Verwendung ein und desselben Befestigungsteils mit ein und demselben Zwischenkörper ausgefüllt werden kann, und zwar je nach Anordnung des Zwischenkörpers im Zwischenraum.

Eine bevorzugte konstruktive Lösung für Streben, welche einen im Wesentlichen rechteckigen Querschnitt aufweisen, schlägt die Weiterbildung gemäß Anspruch 8 vor. Es wird dabei von einem Zwischenkörper in Form einer rechteckigen Platte ausgegangen, welche in zwei Positionen an der Innenwandung des Grundkörpers und/oder des Klemmteils angeordnet werden kann. Dabei ist in der um 90° gedrehten Position eine Vertiefung vorgesehen, in welcher der rechteckige Zwischenkörper zu liegen kommt. Diese Anordnung in der Vertiefung schafft einen größeren Zwischenraum, so daß demgemäß eine etwas dickere Strebe aufgenommen werden kann.

Ein Ausführungsbeispiel einer erfindungsgemäßen Vorrichtung zum Befestigen einer Platte an einer Strebe eines Geländers wird nachfolgend anhand der Zeichnungen beschrieben. In diesen zeigt:

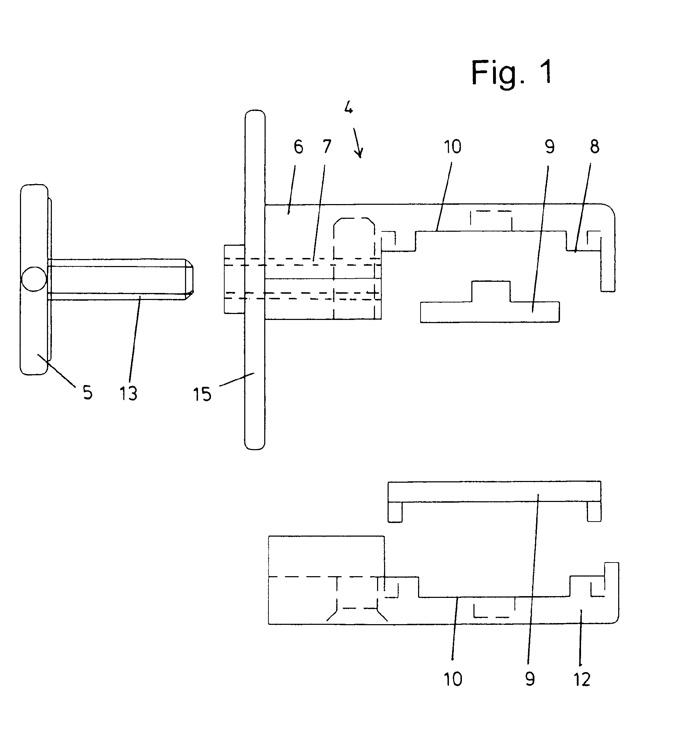

- Fig. 1: eine Art Explosionsdarstellung der Befestigungsvorrichtung;

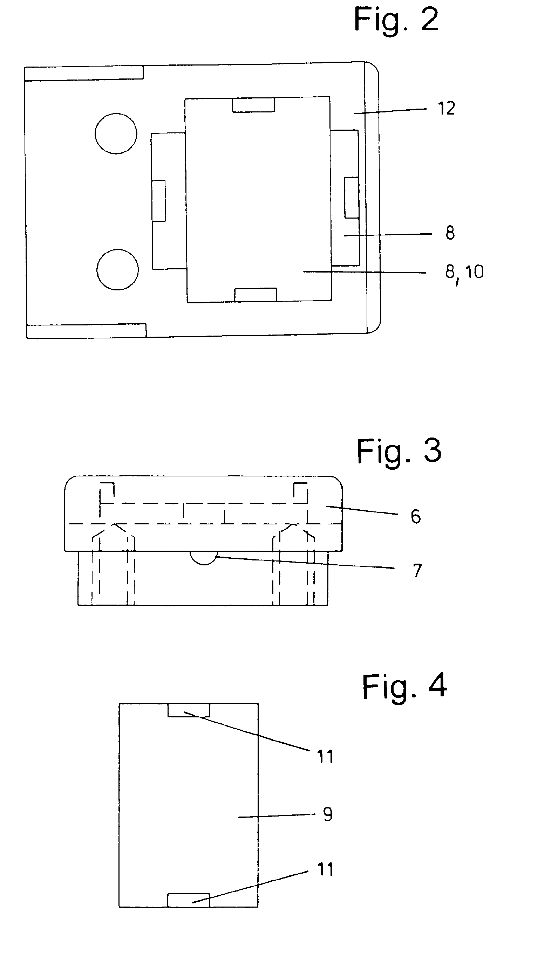

- Fig. 2: eine Ansicht des Klemmteils der Befestigungsvorrichtung;
- Fig. 3: eine Querschnittsansicht des Grundkörpers des Befestigungsteils;
- Fig. 4: eine Ansicht des Zwischenkörpers;
- Fig. 5a bis 5c: Querschnittsdarstellungen durch die Befestigungsvorrichtung mit unterschiedlich dicken Streben.

An einer schematisch angedeuteten Strebe 1 eines Geländers soll eine Platte 2 aus Plexiglas, Kunststoff, Metall, Holz etc. befestigt werden. Diese Platte 2 weist zu deren Befestigung eine Durchgangsbohrung 3 auf.

Die Befestigungsvorrichtung weist zwei grundsätzliche Elemente auf, nämlich zum einen ein Befestigungsteil 4 und zum anderen einen Klemmkopf 5.

Das Befestigungsteil 4 besitzt einen Grundkörper 6, welcher als einstückiges Teil ausgebildet ist. Dieser Grundkörper 6 weist ein Gewinde 7 in Form einer Sacklochbohrung mit Innengewinde auf. Dieser Grundkörper 6 besitzt weiterhin eine rechteckige Aufnahme 8 für einen korrespondierend rechteckigen Zwischenkörper 9 aus Gummi oder einem anderen Material. In dieser Aufnahme 8 ist um 90° gedreht eine Vertiefung 10 angeordnet, welche den Zwischenkörper 9 - um diese 90° gedreht - gleichermaßen aufnehmen kann. Zur Lagefixierung weist dabei der Zwischenkörper 9 Noppen 11 auf.

Außer dem Grundkörper 6 weist das Befestigungsteil 4 noch ein plattenförmiges Klemmteil 12 auf. Dieses besitzt innenseitig wie der Grundkörper 6 eine Aufnahme 8 sowie eine um 90° gedrehte Vertiefung 10 für einen Zwischenkörper 9 mit Noppen 11.

Der Klemmkopf 5 weist einen Bolzen mit einem zu dem Gewinde 7 korrespondierenden Gegengewinde 13 in Form eines Außengewindes auf.

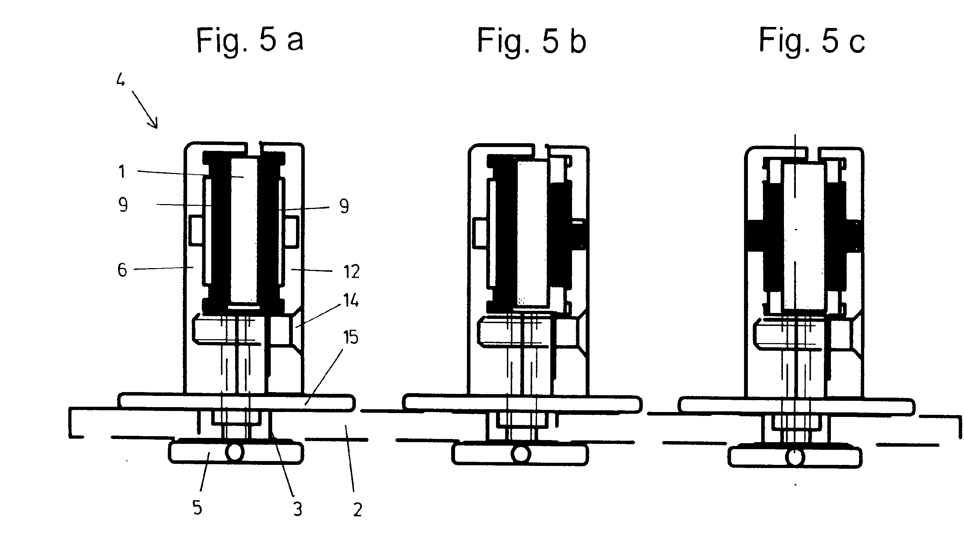

Die Funktionsweise ist wie folgt:
Zunächst wird der Grundkörper 6 des Befestigungsteils 4 an die Strebe 1 angelegt. Dabei befindet sich der Zwischenkörper 9 mit seinen Noppen 11 in der Aufnahme 8. Diese Situation ist in Fig. 5a dargestellt. Anschließend wird das Klemmteil 12 seitlich an den Grundkörper 6 angefügt. Wie in Fig. 5a erkennbar ist, ist dabei der diesem Klemmteil 12 zugeordnete Zwischenkörper 9 in der entsprechenden Aufnahme 8 aufgenommen. Zum Verbinden des Klemmteils 12 mit dem Grundkörper 6 werden zwei Schrauben 14 eingedreht. Dadurch ist das Befestigungsteil 4 fest auf der Strebe 1 montiert.

Anschließend kann die Platte 2 mit ihrer Durchbohrung 3 auf eine Basisplatte 15 des Grundkörpers 6 des Befestigungsteils 4 aufgeschoben werden. Die Basisplatte 15 und der Grundkörper 6 können dabei einteilig oder zweiteilig ausgebildet sein. Danach wird der Klemmkopf mit seinem Außengewinde aufgeschraubt, so daß die Platte 2 sandwichartig zwischen dem Befestigungsteil 4 und dem Klemmkopf 5 festgelegt ist.

Fig. 5b zeigt die Situation mit einer Strebe 1, welche im Vergleich zur Strebe 1 in Fig. 5a etwas dicker ist. Zu diesem Zweck wird im Klemmteil 12 der Zwischenkörper 9 um 90° gedreht und in die Vertiefung 10 eingelegt. Dadurch vergrößert sich der Abstand zwischen den beiden Zwischenkörpern 9. Die Vertiefung 10 gleicht somit die größere Dicke der Strebe 1 aus. Sofern der Zwischenkörper 9 aus einem elastischen Material besteht, können auch Streben 1 mit unterschiedlich dicken Variationen ausgeglichen werden, da dann das elastische Material zusammengepreßt werden kann.

In Fig. 5c schließlich ist die Situation einer noch dickeren Strebe 1 dargestellt. Hier befinden sich die beiden Zwischenkörper 9 in den jeweiligen Vertiefungen 10 sowohl des Befestigungsteils 4 als auch des Klemmteils 12.

### Bezugszeichenliste

- 1: Strebe
- 2: Platte
- 3: Durchbrechung
- 4: Befestigungsteil
- 5: Klemmkopf
- 6: Grundkörper
- 7: Gewinde
- 8: Aufnahme
- 9: Zwischenkörper
- 10: Vertiefung
- 11: Noppen
- 12: Klemmteil
- 13: Gegengewinde
- 14: Schraube
- 15: Basisplatte

## Patentansprüche

1. Vorrichtung zum Befestigen einer Platte (2) an einer Strebe (1) eines Geländers,
**dadurch gekennzeichnet,**
**daß** ein Befestigungsteil (4) mit einem Gewinde (7) zur Befestigung der Befestigungsvorrichtung an der Strebe (1) sowie ein Klemmkopf (5) mit einem dazu korrespondierenden Gegengewinde (13) vorgesehen sind,
**daß** die zu befestigende Platte (2) zwischen dem Befestigungsteil (4) einerseits und dem mit seinem Gegengewinde (13) in oder auf das Gewinde (7) des Betätigungsteils (4) eingedrehten Klemmkopf (5) andererseits sandwichartig festgelegt ist,
**daß** das Befestigungteil (4) zweiteilig mit einem Grundkörper (6) als erstes Teil sowie mit einem Klemmteil (12) als zweites Teil ausgebildet ist, welche unter Zwischenanordnung der Strebe (1) durch wenigstens eine Schraube (14) fest miteinander verbunden sind und
**daß** das Gewinde (7) am Grundkörper (6) des Befestigungsteils (4) ausgebildet ist.

2. Vorrichtung nach dem vorhergehenden Anspruch,
**dadurch gekennzeichnet,**
**daß** das Gewinde (7) ein Innengewinde ist und
**daß** das Gegengewinde (13) ein Bolzen mit einem Außengewinde ist.

3. Vorrichtung nach einem der vorhergehenden Ansprüche,
**dadurch gekennzeichnet,**
**daß** das Klemmteil (12) seitlich an den Grundkörper (6) anfügbar ist.

4. Vorrichtung nach einem der vorhergehenden Ansprüche,
**dadurch gekennzeichnet,**
**daß** innenseitig an dem Grundkörper (6) und/oder an dem Klemmteil (12) ein Zwischenkörper (9) anordenbar ist.

5. Vorrichtung nach Anspruch 4,
**dadurch gekennzeichnet,**
**daß** der Zwischenkörper (9) aus einem elastischen Material besteht.

6. Vorrichtung nach Anspruch 4 oder 5,
**dadurch gekennzeichnet,**
**daß** unterschiedlich dicke Zwischenkörper (9) anordenbar sind.

7. Vorrichtung nach einem der Ansprüche 4 bis 6,
**dadurch gekennzeichnet,**
**daß** ein und derselbe Zwischenkörper (9) derart in unterschiedlichen Positionen anordenbar ist,
**daß** er für unterschiedlich dicke oder für unterschiedlich profilierte Streben (1) einsetzbar ist.

8. Vorrichtung nach Anspruch 7,
**dadurch gekennzeichnet,**
**daß** die Strebe (1) einen im Wesentlichen rechteckigen Querschnitt aufweist,
**daß** der Zwischenkörper (9) im Wesentlichen rechteckig ausgebildet ist und
**daß** die Innenseite des Grundkörpers (6) und/oder die Innenseite des Klemmteils (12) eine erste Einlegeposition für den Zwischenkörper (9) sowie eine hierzu um 90° gedrehte, in einer Vertiefung (10) sich befindende zweite Einlegeposition für den Zwischenkörper (9) aufweist.
